(19) Europäisches Patentamt / European Patent Office / Office européen des brevets

(11) **EP 3 115 366 A1**

(12) **EUROPEAN PATENT APPLICATION**

(43) Date of publication:
**11.01.2017 Bulletin 2017/02**

(51) Int Cl.:
***C07F 9/59*** *(2006.01)*

(21) Application number: **15306114.8**

(22) Date of filing: **07.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
- **Centre National de la Recherche Scientifique 75016 Paris (FR)**
- **Universite d'Aix Marseille 13284 Marseille Cedex 07 (FR)**

(72) Inventor: **The designation of the inventor has not yet been filed**

(74) Representative: **Gevers & Orès 41 avenue de Friedland 75008 Paris (FR)**

(54) **DEVELOPMENT OF RADICAL PROBES HIGHLY SENSITIVE TO THE POLARITY**

(57) The present invention relates to a compound of formula (I) or (II) and its use for detecting and/or quantifying a solvent $S_1$ in a solvent $S_2$, $S_1$ and $S_2$ being distinct:

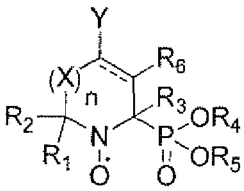

(I)

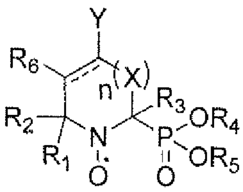

(II)

Wherein $R_1$, $R_2$, $R_3$, $R_4$, $R_5$, $R_6$, X, Y and n are as defined in claim 1.

EP 3 115 366 A1

## Description

Since the seminal work of Knauer et al.[1] on the effect of 40 solvents with 4 nitroxides, values of $a_N$ for a (scheme 1) are considered as benchmark values and used for all discussion of solvent effect involving nitroxides. However, the sensitivity of nitroxides to solvent effect is rather weak, i.e. $\Delta a_N \approx 2$ G from *n*-hexane to water for **a**. However, in 1976, Il'Yasov and coll.[2] reported a striking solvent effect ($\approx$ 18 G) on the phosphorus hyperfine coupling constant $a_P$ of the non-cyclic nitroxide **b**. However, this result did not raise any interest presumably because such a nitroxide was not stable. Recently, [3] a weak effect ($\approx$ 2 G from *n*-pentane to *N*-methyl formamide and $\approx$ 0.6 G from *n*-pentane to water) of the polarity of solvent on $a_P$ for the stable non-cyclic nitroxide **c** has been reported.

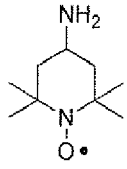

**a**

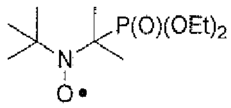

**b**

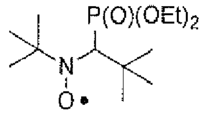

**c**

It now has been discovered a class of stable betaphosphorylated nitroxides exhibiting a high sensitivity to solvent effect, that is, a significant change in the phosphorus hyperfine coupling constant ($\Delta a_P$), notably a $\Delta a_P$ superior to 20 G, between two distinct solvents, herein referred as $S_1$ and $S_2$.

Taking into account the high sensitivity (around ppb) of Electron Paramagnetic Resonance (EPR), this significant solvent effect is particularly advantageous either for detecting and/or quantifying a first solvent $S_1$, for instance water, in a second solvent $S_2$, for instance an organic solvent, or for investigating of changes in structure in materials when correlated to the change in polarity. As an example, a threshold of 0.1% by volume of water in THF can be detected using the betaphosphorylated nitroxides compounds according to the invention.

Thus, in one aspect, the invention relates to a compound of formula (I) or (II):

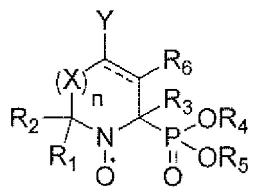

(I)

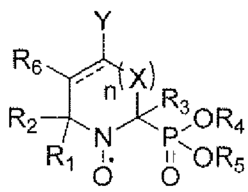

(II)

wherein:

- $R_1$ is $C_1$-$C_6$ alkyl optionally substituted by $R_9$;
- $R_2$, $R_3$ are independently selected from $C_1$-$C_6$ alkyl, $C_6$-$C_{10}$ aryl, 5 to 7 membered heteroaryl optionally substituted by $R_{10}$;
- $R_4$, $R_5$ are independently selected from $C_1$-$C_6$ alkyl, $C_6$-$C_{10}$aryl, 5 to 7 membered heteroaryl;

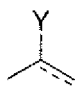 = 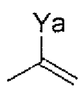 or 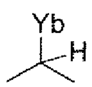

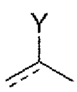 = 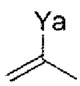 or 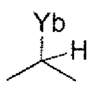

- $Y_a$ is selected from $C_1$-$C_6$ alkylcarbonyloxy, $C_1$-$C_6$ alkoxycarbonyloxy, $C_1$-$C_6$ alkylthiocarbonyl wherein said alkyl groups are optionally substituted by one or more F, and/or Cl, $OSi(R_{11})_3$, $OSi(OR_{11})_3$ and/or $OSi(R_{12})_3$, $OSO_2R_{13}$;
- $Y_b$ is H, OH or $NHR_8$;
- X is $(CH_2)_mCHR_7(CH_2)_p$;
- $R_6$, $R_7$ are independently selected from H, OH, $NH_2$, $NHR_8$, an halogen atom, $C_1$-$C_6$; alkyl, $C_6$-$C_{10}$ aryl, 5 to 7 membered heteroaryl;

$R_8$ is selected from H, $C_1$-$C_6$ alkyl;
$R_9$, $R_{10}$ are each independently selected from OH, $NH_2$, $NHR_8$;
$R_{11}$ is at each occurrence independently selected from $C_1$-$C_6$ alkyl, $C_6$-$C_{10}$ aryl;
$R_{12}$ is independently F or Cl;
$R_{13}$ is independently selected from $C_1$-$C_6$ alkyl, $C_1$-$C_6$ perfluoroalkyl, ($C_1$-$C_6$)alkyl($C_6$-$C_{10}$)aryl, and is notably $CH_3$, $CF_3$ or tolyl;
n is 0 or 1;
m is 0 or 1;
p is 0 or 1;
provided that when

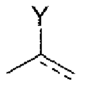 or 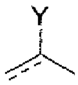 is 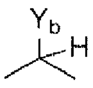,

then at least one of $R_6$, $R_7$, $R_9$, $Y_b$ is an hydrophilic group selected from OH, $NH_2$, $NHR_8$, said hydrophilic group being in *cis* position as regards the group -P(=O)($OR_4$)($OR_5$).

In one embodiment, the compound of formula (I) and (II) is a compound of formula (Ia) or (IIa) :

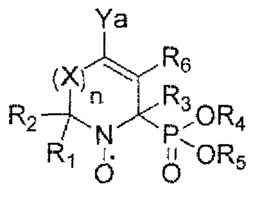
(Ia)

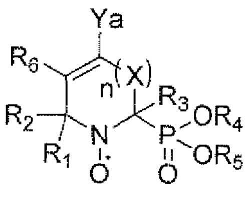
(IIa)

In another embodiment, the compound of formula (I) and (II) is a compound of formula (Ib) or (IIb) :

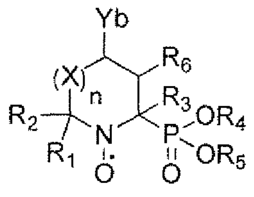
(Ib)

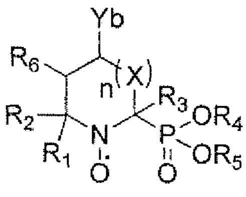
(IIb)

In a particular embodiment, n is 0.

In a further embodiment, n is 1.

In yet another embodiment, m+p is 0 or 1, notably 0.

In a further embodiment, m is 0 and p is 0.

In still a particular embodiment, $Y_b$ is OH.

In an additional embodiment, $R_2$, $R_3$ are each independently a $C_1$-$C_6$ alkyl group.

In a further embodiment, $R_4$, $R_5$ are each independently a $C_1$-$C_6$ alkyl group.

In a specific embodiment, the compound of formula (Ib) is diethyl (4-hydroxy-2,6,6-trimethylpiperidin-2-yl-N-oxyl)phosphonate.

In a second aspect, the invention relates to the use of a compound of formula (I) or (II) as defined above for detecting and/or quantifying a solvent $S_1$ in a solvent $S_2$, $S_1$ and $S_2$ being distinct,
provided that when

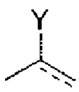 = 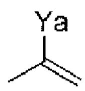

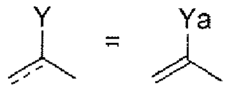

then $S_1$ is water.

In one embodiment, $S_1$ is water and $S_2$ is an organic solvent.

In another embodiment, $S_1$ is an organic solvent and $S_2$ is water.

In an additional embodiment, $S_1$ and $S_2$ are each an organic solvent. Preferably, $\Delta E$, that is the difference between the normalized Reichardt polarity Constant $E_T^N$ between $S_1$ and $S_2$ corresponds to a (delta)$a_P$ larger than 4G.

In a particular embodiment, the change in the phosphorus hyperfine coupling constant of the compound of formula (I) or (II) is superior to 15 G between $S_1$ and $S_2$.

In a further embodiment, the compound of formula (I) or (II) is used for detecting and/or quantifying a solvent $S_1$ crossing a polymeric film or a polymeric or biological membrane, said film or membrane having no permeability to the solvent $S_2$ containing the compound of formula (I) or (II).

As an example, the nitroxide compound of formula (I) may be dissolved in a non polar solvent and conversely. Then, it is possible to detect the traces of polar solvent crossing the film/membranes and conversely, using EPR as a technique of detection.

The film/membrane has no permeability to the solvent containing the nitroxide probe.

In a further embodiment, the compounds of formula (I) or (II) are used for studying or monitoring membrane porosity, film permeability, swelling of polymer, stability of materials, drug delivery.

## Figures

**Figure 1**: EPR signal from pure THF (top) to pure water (bottom) and with different v% of water (from top to bottom, 0, 0.2, 0.6, 1.0, 2.0, and 100).
**Figure 2**: Plots $a_N$ vs $E_T^N$ for **a** (★), **b** (●), **8c** (■), and **8t** (♦). Empty symbols are for outliers.
**Figure 3**: Plots $a_P$ vs $E_T^N$ for **b** (●), **8c** (■), and **8t** (♦). Empty symbols are for outliers.
**Figure 4**: Plots $\theta$ vs $a_P$ for **b** (●), **8c** (■), and **8t** (♦).
**Figures 5, 6 and** 7: (Figure 5) Plots $x_w$ vs $a_P$ for **8c**. Plots % volume of water vs $a_P$ for **8c** (Figure 6) from pure THF to pure water and (Figure 7) from pure THF to 1% water.

## Examples

**Example 1** :Synthesis of diethyl (4-hydroxy-2,6,6-trimethylpiperidin-2-yl-N-oxyl)phosphonate (8) and diethyl (2,6,6-trimetbyl-4-oxopiperidin-2-yl-N-oxyl)phosphonate (10)

Nitroxide **9** was prepared in **8** steps (Scheme 2) starting from the commercially available 2,6-dimethyl-4-hydroxyhept-1,6-diene **1**. The hydroxyl function was protected with the conventional tert-butyldimethylsilyl chloride (TBDMSC1) to afford **2**. Then, one of the double bond of **2** was selectively oxidized into diol **3** with OsO4 as oxidizing reagent. Diol **3** oxidized into ketone **4** with NaIO4 Then, aminophosphonate **5** was obtained under condition specific for aminophosphorylation. Cyclization of **5** into **6** was performed in the presence of $Hg(OAc)_2$ and the crude materials was oxidized with meta-chloperbenzoic acid (m-CPBA) into nitroxide **7**. The protecting group of the latter was hydrolyzed to yield **8** which was oxidized into **9**. The regioselectivity of the formation of the intracyclic double bond to afford **10** was controlled by using a bulky base, potassium hexamethyldisilazane (KHMDS), which reacted with the most accessible acidic protons which were the farer from the diethoxyphosphoryl group.

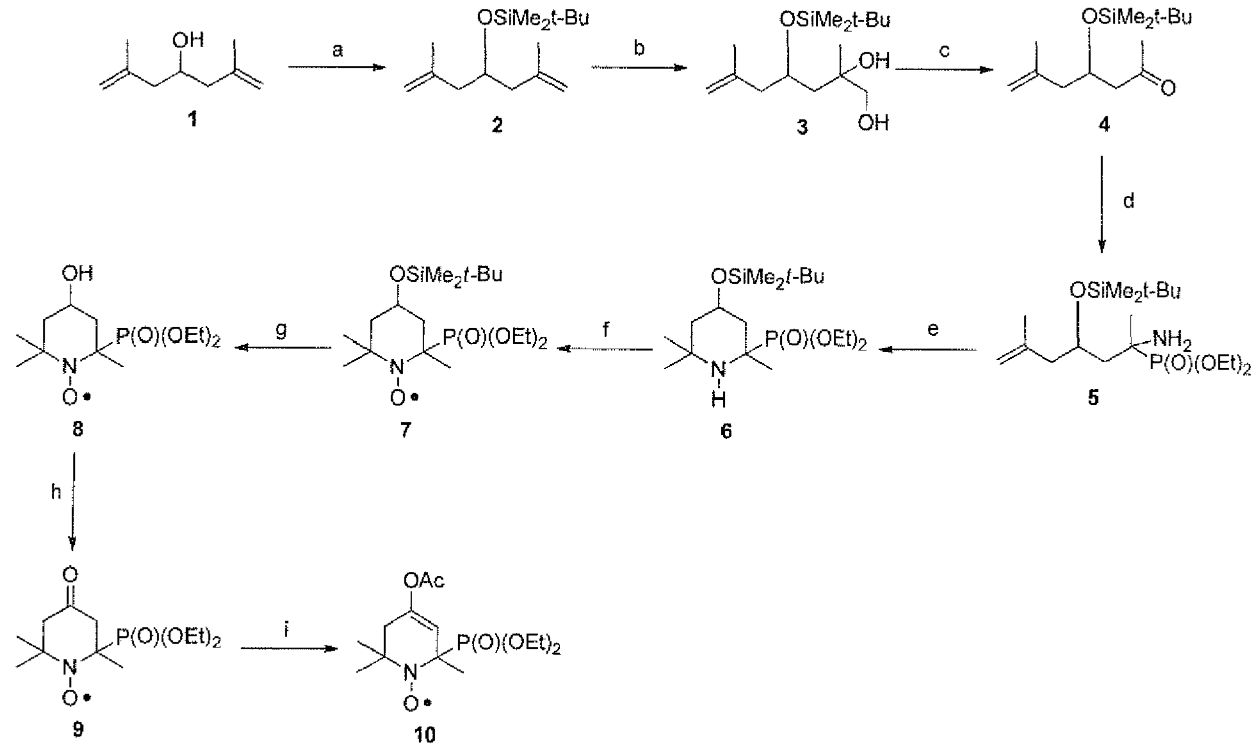

1 2 3 4 5 6 7 8 9 10

Scheme 2

***a) tert-butyl((2,6-dimethylhepta-1,6-dien-4-yl)oxy)dimethylsilane (2).***

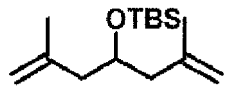

Alcohol **1** (11.5 g, 82.0 mmol), which was prepared according to the method disclosed into Breit, B. ; Breuninger, D. J. Am. Chem. Soc. 2004, 126, 10244, was dissolved in DMF (250 mL), imidazole (17 g, 246 mmol) and *tert*-butyldimethylsilyl chloride (25 g, 164 mmol) were added, and the mixture was stirred for 5 h at 0 °C. The solution was poured into water and extracted with $Et_2O$. The organic layers were washed with water, brine, dried with $MgSO_4$, filtered, and concentrated. Column chromatography yielded 20.6 g (99%) of **2** as a colorless oil. $^1H$ NMR (400 MHz, $CDCl_3$): $\delta$ 4.77 (br s,2H), 4.71 (br s,2H),3.93 (q, *J*= 6.3 Hz, 1H), 2.20-2.11 (m, 4H), 1.73 (s, 6H), 0.87 (s, 9H), 0.04 (s, 6H). $^{13}C$ NMR (75 MHz, $CDCl_3$): $\delta$ 143.0 (2C), 113.2 ($2CH_2$), 69.8 (CH), 46.0.($2CH_2$), 26.1 ($3CH_3$), 23.2 ($2CH_3$), 18.3 (C), -4.4 ($2CH_3$).

***b) 4-((tert-butyldimethylsilyl)oxy)-2,6-dimethylhept-6-ene-1,2-diol (3).***

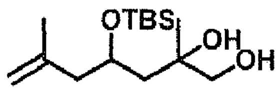

Alkene 2 (4.3 g, 16.9 mmol) was dissolved in 200 ml of a mixture acetone/ water (3/1v:v), then $OsO_4$ (1 mL of 4%w in water) was added and the mixture was stirred for 15 min at 0 °C. After that, *N*-methylmorpholine-*N*-oxide (4.0 g, 33.8 mmol) was added and stirred for 4 h at 0 °C. The solution was poured into 10 % aqueous $Na_2S_2O_3$ and extracted with $Et_2O$. The organic layers were washed with water, brine, dried with $MgSO_4$, filtered, and concentrated. The crude product was obtained as a mixture of 2 diastereoisomers (ratio 2:1). Column chromatography afforded 3.38 g of **2**and 0.9g (86%) of 3as a yellowish oil. $^1H$ NMR (400 MHz, $C_6D_6$): $\delta$ 4.78 (br s, 1H, M), 4.76 (br s, 1H, m+M), 4.70 (br s, 1H, m), 4.26 (m, 1H, m+M), 3.78 (s, 1H, m), 3.45-3.28 (m, 2H m, 3H M), 2.37-2.27 (m, 1H, m+M), 2.22-2.07 (m, 1H M, 2H

m), 1.87-1.70 (m, 2H M, 1H m) 1.65-1.50 (m, 4H M, 4H m), 1.18 (s, 3H, M), 1.14 (s, 3H, m), 0.94 (s, 9H, m + M), 0.11 (s, 3H, m), 0.09 (s, 3H, M), 0.05 (s, 3H, m+M). $^{13}C$ NMR (75 MHz, $C_6D_6$): δ 142.5 (C,M), 142.0 (C,m), 113.9 ($CH_2$, m), 113.7 ($CH_2$, M), 73.0 (C, m), 72.7 (C, M), 71.0 ($CH_2$, m), 70.1 ($CH_2$, M), 69.7 (CH, m), 69.6 (CH, M), 47.9 ($CH_2$, m+M), 44.3 ($CH_2$, M), 43.1 ($CH_2$, m), 26.2 ($CH_3$, M), 26.2 ($CH_3$, m), 25.5 ($CH_3$, M), 24.0 ($CH_3$, m), 22.9 ($CH_3$, M), 22.8 ($CH_3$, m), 18.2 (C, M), 18.2 (C,m), -3.4 ($CH_3$, m), -3.5 ($CH_3$, M), -4.2 ($CH_3$, M), -4.3 ($CH_3$, m).

***c) 4-((tert-butyldimethylsilyl)oxy)-6-methylhept-6-en-2-one (4)***

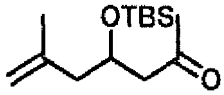

Diol 3 (6,0 g, 20.8 mmol) was solved in 300 ml of a THF/water mixture (3/1 v:v) with 11.0 g (52.0 mmol) of $NaIO_4$ and stirred at 0 °C for 3 h. The solution was poured into water and extracted with $Et_2O$. The organic layers were washed with water, dried with $MgSO_4$, filtered, and concentrated. Column chromatography yielded 5.11 g (96%) of 4 as a yellowish oil. $^1H$ NMR (400 MHz, $CDCl_3$): δ 4.78 (br s, 1H), 4.70 (br s, 1H), 4.36-4.28 (m, 1H), 2.60-2.47 (m, 2H), 2.30-2.10 (m, 2H), 2.15 (s, 3H), 1.74 (brs, 3H), 0.86 (s, 9H), 0.07 (s, 3H) 0.03 (s, 3H). $^{13}C$ NMR (75 MHz, $CDCl_3$): δ 207.9 (C), 142.3 (C), 113.7 ($CH_2$), 67.8 (CH), 50.5 ($CH_2$), 46.6 ($CH_2$), 31.8 ($CH_3$), 25.9 ($3CH_3$), 23.0 ($CH_3$), 18.05 (C), -4.5 ($CH_3$), - 4.8 ($CH_3$).

***d) diethyl (2-amino-4-((tert-butyldimethylsilyl)oxy)-6-methylhept-6-en-2-yl)phosphonate(5)***

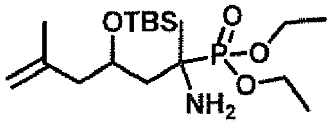

Ketone 4 (1.0 g, 3.9 mmol) was dissolved in 5 ml of diethylphosphite. Molecular sieves 4Å were added and the mixture was stirred under an ammoniac atmosphere for 24 h. Then, the mixture was filtered and the excess of diethylphosphite was removed under vacuum (50 °C, 2 mmHg). Column chromatography afforded 5 (550 mg, 37%) as a yellowish oil. $^1H$ NMR (400 MHz, $CDCl_3$): δ 4.77 (br s, 1H, m+M), 4.71 (br s, 1H, m+M), 4.42-4.32 (m, 1H, M), 4.27-4.20 (m, 1H, m), 4.19-4.07 (m, 4H, m+M), 2.34-2.13 (m, 2H, m+M), 1.95-1.85 (m, 1H, m+M), 1.80-1.55 (m, 6H, m+M), 1.37-1.28 (m, 9H), 0.88 (s, 9H, m+M), 0.12 (s, 3H,M), 0.12 (s, 3H,m), 0.11 (s, 3H,m), 0.11 (s, 3H, M). $^{31}P$ NMR (162 MHz, $CDCl_3$): δ 31.67 (M), 30.88 (m). $^{13}C$ NMR (75 MHz, $CDCl_3$): δ 142.7 (C, M), 142.2 (C, m), 113.5 ($CH_2$, m), 113.3 ($CH_2$, M), 67.8 (d, $J$ = 13.2 Hz, CH, m), 67.6 (d, $J$ = 10.5 Hz, CH, M), 62.5-62.1(d overlapped, $2CH_2$ m, $2CH_2$ M), 52.0 (d, $J$= 155 Hz, C, m), 51.8 (d, $J$= 146 Hz, C, M), 48.16 ($CH_2$, M), 48.0 ($CH_2$, m), 42.7 (d, $J$ = 3.9 Hz, $CH_2$), 41.9 ($CH_2$), 26.0 ($3CH_3$), 23.8 ($CH_3$), 22.9 (d, $J$ = 2.2 Hz, $CH_3$, M), 22.7 (d, $J$ = 2.2 Hz, $CH_3$, m), 18.0 (C, M), 18.0 (C,m), 16.6 (d, $J$ = 5.5 Hz, $CH_3$), -3.6 ($CH_3$, m), -3.6 ($CH_3$, M), -4.1 ($CH_3$, m), -4.1 ($CH_3$, M).

***e) diethyl (4-((tert-butyldimethylsilyl)oxy)-2,6,6-trimethylpiperidin-2-yl-N-oxyl)pkospftonate (7).***

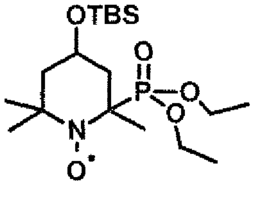

The aminophosphonate **5** (400 mg, 1.02 mmol) was dissolved in 50 mL of THF/water mixture (3/1 v:v). $Hg(OAc)_2$ (389 mg, 1.22 mmol) in 50 mL of the same solvent was slowly added to the aminophosphonate mixture and was stirred

for 30 min at room temperature. Then, the mixture was poured on 50 ml of aqueous solution of $NaBH_4$ (77 mg, 2.03 mmol) and NaOH (163 mg, 4.06 mmol), extracted with $Et_2O$. The organic layers were washed with brine, dried with $MgSO_4$, filtered, and concentrated to yield 397 mg of piperidine 6 which was used in the next step without further purifications.

A solution of piperidin **6** (900 mg, 2.29 mmol) and *m*-CPBA (1.26 g, 4.58 mmol) in DCM was stirred 2 hours at 0 °C. The solution was poured into 10 % aqueous $Na_2S_2O_3$ and extracted with DCM. The organic layers were washed with saturated aqueous solution of $NaHCO_3$, dried with $MgSO_4$, filtered, and concentrated. The crude product was obtained as a mixture of 2 diastereoisomers (ratio 2:1). Column chromatography yielded 685 mg of **7** (73%) as a red oil. The two diastereoisomers was separated and the major one was crystalized from $Et_2O$.

***f) diethyl (4-hydroxy-2,6,6-trimethylpiperidin-2-yl-N-oxyl)phosphonate (8)***

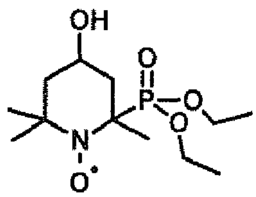

TBAF (1.0 M solution in THF, 1.47 mL, 1.47 mmol) was added dropwise to an ice-cold solution of silyl ether **7** (400 mg, 0.979 mmol) in dry THF (4 mL), under argon. The mixture was stirred 3 hours at room temperature and poured in a column of silica gel to afford 262 mg of **8** (91%) as a red oil.

***g) diethyl (2,6,6-trimethyl-4-oxopiperidin-2-yl-N-oxyl)phosphonate (9)***

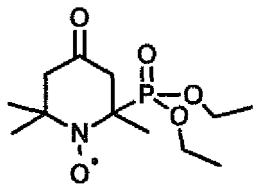

*N*-methylmorpholine *N*-oxide (128 mg, 1.09 mmol, 4.0 equiv.) was added to a stirred ice-cold solution of **8** (80 mg, 0.272 mmol) with a catalytic amount of tetrapropylammonium perruthenate and powdered molecular sieves 4 Å in dry DCM (10 mL) under an argon atmosphere. After 20 min of stirring at room temperature, the reaction mixture was added to a column of silica gel to afford 70 mg of **9** (88%) as an orange solid.

***h) 2-(diethoxyphosphonyl)-2,6,6-trimethyl-1,2,3,6-tetrahydropyridin-4-yl-N-oxyl acetate (10)***

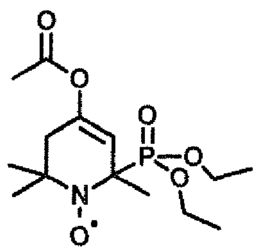

Ketone **9** (100 mg, 0.342 mmol) in 5 mL of dry THF was slowly added to a solution of KHMDS (1.0 M solution in THF, 0.513 mL, 0.513 mmol) in 5 mL of dry THF. The enolate formation was kept 3 hours from -80 °C to -45 °C. Then, freshly distillated $Ac_2O$ (70 mg, 0.684 mmol) was slowly added. The mixture was stirred 2.5 hours. After that, the solution

was poured on brine and extracted with EtOAc. The organic layers were dried with $MgSO_4$, filtered, and concentrated. Column chromatography yielded 105 mg (91%)of **10** as a red oil.

**Example 2:** Study of $a_N{}^a$ and $a_P{}^a$ values **of 8c** and **8t** in various solvents

The two diastereoisomers **8c** and **8t** (Figure 1) with the diethoxyphosphoryl and hydroxyl groups in *cis* and *trans* relationships, respectively, were investigated separately. The effect of 45 solvents (Table 1) on $a_N$ and $a_P$ was investigated by EPR as well as the effect of the THF/water binary mixture of solvent from pure THF to pure water (Table 2) as exemplified in Figure 1.

**Table** 1. $a_N{}^a$ and $a_P{}^a$ values of **8c** and **8t** in 45 solvents[b] as well as the corresponding normalized Reichardt polarity solvent constant $E_T{}^{Nc}$.

| | | | **8c**[a] | | **8t**[a] | |
|---|---|---|---|---|---|---|
| | solvent[b] | $E_T{}^{Nc}$ | $a_N$ | $a_P$ | $a_N$ | $a_P$ |
| 1 | *n*-pentane | 0.009 | 13.67 | 47.75 | 13.58 | 51.80 |
| 2 | *n*-hexane | 0.009 | 13.09 | 47.75 | 13.77 | 51.41 |
| 3 | CHex | 0.006 | 13.96 | 47.85 | 13.77 | 51.61 |
| 4 | *n*-octane | 0.012 | 13.58 | 47.95 | 13.67 | 51.70 |
| 5 | benzene | 0.111 | 14.44 | 40.44 | 14.06 | 50.93 |
| 6 | toluene | 0.099 | 14.25 | 40.92 | 13.96 | 51.12 |
| 7 | *t*-BuPh | 0.099 | 13.86 | 43.33 | 13.86 | 51.22 |
| 8 | PhBr | 0.182 | 14.44 | 40.15 | 14.06 | 50.45 |
| 9 | Pyridine | 0.302 | 15.31 | 25.23 | 14.15 | 49.87 |
| 10 | AcPh | 0.306 | 15.11 | 27.82 | 14.15 | 50.26 |
| 11 | *t*-BuPH/ $CH_2Cl_2$ | *f* | 14.63 | 36.20 | 14.06 | 49.97 |
| 12 | $CH_2Cl_2$ | 0.309 | 14.73 | 33.89 | 14.15 | 50.26 |
| 13 | DCE | 0.327 | 14.73 | 33.89 | 14.15 | 50.26 |
| 14 | $CHCl_3$ | 0.259 | 14.83 | 33.79 | 14.25 | 50.83 |
| 15 | $CCl_4$ | 0.052 | 13.77 | 44.96 | 13.96 | 51.51 |
| 16 | DME | 0.231 | 14.92 | 27.83 | 13.96 | 50.55 |
| 17 | $Et_2O$ | 0.117 | 14.73 | 33.31 | 13.96 | 51.22 |
| 18 | *i*-$Pr_2O$ | 0.105 | 14.63 | 35.05 | 13.67 | 51.03 |
| 19 | *n*-$Bu_2O$ | 0.071 | 14.54 | 33.89 | 13.96 | 50.83 |
| 20 | Me*t*-BuO | 0.124 | 14.44 | 31.29 | 13.86 | 50.93 |
| 21 | 14D | 0.164 | 15.02 | 26.96 | 14.15 | 51.03 |
| 22 | THF | 0.207 | 14.92 | 29.65 | 14.15 | 51.03 |
| 23 | AcOEt | 0.228 | 15.02 | 29.27 | 13.96 | 50.83 |
| 24 | acetone | 0.355 | 15.31 | 27.15 | 14.15 | 50.45 |
| 25 | ACN | 0.460 | 15.40 | 26.09 | 14.15 | 49.87 |
| 26 | $MeNO_2$ | 0.481 | 15.31 | 26.86 | 14.25 | 49.78 |
| 27 | DMSO | 0.444 | 15.40 | 24.55 | 14.15 | 50.16 |
| 28 | F | 0.775 | 15.69 | 23.11 | 14.63 | 48.14 |
| 29 | NMF | 0.722 | 15.50 | 23.11 | 14.44 | 47.27 |
| 30 | DMF | 0.386 | 15.50 | 25.13 | 14.06 | 50.06 |
| 31 | MeOH | 0.762 | 15.40 | 24.07 | 14.53 | 48.43 |
| 32 | EtOH | 0.654 | 15.40 | 24.26 | 14.54 | 48.72 |
| 33 | TFE | 0.898 | 15.89 | 24.55 | 14.73 | 51.13 |
| 34 | *i*-PrOH | 0.546 | 15.21 | 25.03 | 14.35 | 49.58 |
| 35 | *n*-BuOH | 0.586 | 15.31 | 24.55 | 14.35 | 48.43 |
| 36 | *t*-BuOH | 0.389 | 15.31 | 25.61 | 14.25 | 51.41 |
| 37 | BnOH | 0.608 | 15.60 | 24.07 | 14.44 | 49.58 |
| 38 | EG | 0.790 | 15.60 | 23.49 | 14.54 | 49.29 |
| 39 | TEG | 0.682 | 15.11 | 24.26 | 14.35 | 49.10 |

(continued)

| | solvent[b] | $E_T^{Nc}$ | 8c[a] $a_N$ | 8c[a] $a_P$ | 8t[a] $a_N$ | 8t[a] $a_P$ |
|---|---|---|---|---|---|---|
| 40 | water/ MeOH | 0.71 | 15.79 | 23.97 | 14.92 | 49.68 |
| 41 | water | 1 | 16.08 | 23.97 | 15.21 | 49.68 |
| 42 | Tampon | f | 16.08 | 23.97 | 15.21 | 49.78 |
| 43 | AcOH | 0.648 | 15.50 | 24.45 | 14.44 | 49.97 |
| 44 | $Et_3N$ | 0.043 | 13.78 | 30.91 | 13.86 | 51.61 |
| 45 | *i*-$Pr_2NH$ | 0.145 | 14.70 | 29.56 | 13.86 | 51.22 |

[a] $a_N$ and $a_P$ are given in G (1 G = 0.1 mT). [b] CHex: *cyclo*-hexane, tBuPh: *tert*-butylbenzene, PhBr: bromobenzene, AcPh: acetophenone, DCE: 1,2-di-chloroethane, DME: 1,2-dimethoxyethane, 14D: 1,4-dioxane, THF: tetrahydrofurane, AcOEt: ethyl acetate, ACN: acetonitrile, DMSO: dimethylsulfoxide, F: formamide, NMF: *N*-methylformamide, DMF: N,N-dimethylformamide, TFE: 2,2,2-trifluoroethanol, EG: ethylene glycol, TEG: triethylene glycol, AcOH: acetic acid, BnOH: benzylic alcohol. [c] $E_T^N$ values are given in Ref. [4] unless otherwise mentioned.[f] Not available.

The changes in $a_N$ for **8c** and **8t** as well as the changes in $a_P$ for **8t** are nicely accounted by effect recently discussed for several nitroxide models.

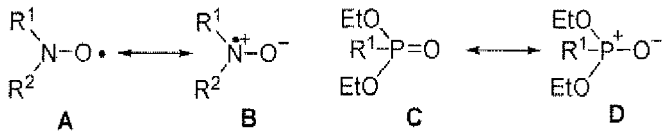

A B C D

*Scheme 2: Canonical forms A and B of the nitroxyl moiety and C and D of the phosphoryl moiety*

$$a_N = Q \cdot \rho_N \quad (1)$$

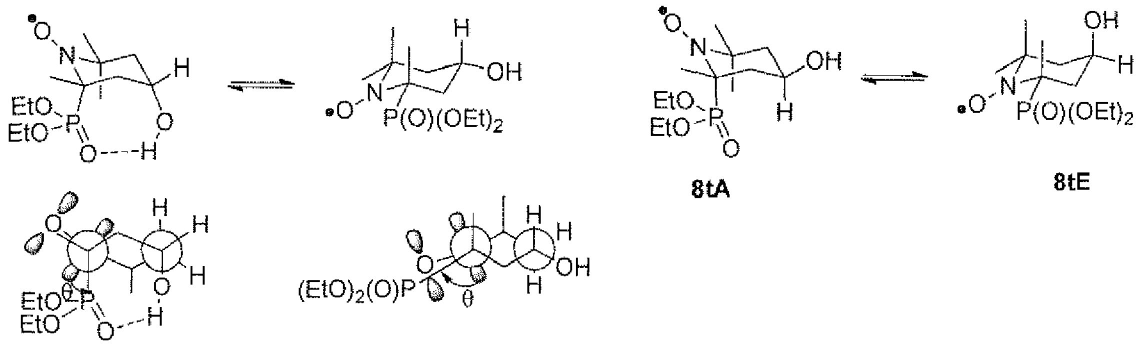

8tA 8tE

8cA θ = 30°

8cE θ = 90°

*Scheme 3 : Conformational chair-chair equilibrium controlled by IHB in **8c** and **8t**. Dotted line is for IHB. q is the dihedral angle between the SOMO (gray orbitals) and the C—P bond. **A** and **E** are for the diethoxyphosphoryl group in axial and equatorial positions, respectively.*

The hyperfine coupling constant of atom at the position β is given by the Heller-McConnel relationship (equation 2) with $B_0$ for the constant for the transfer of the spin density through the spin polarization process (in general disregarded), $B_1$ for the constant for the transfer of the spin density through the hyperconjugation process, $\rho_N^{\pi}$ the spin density on the

nitrogen atom, and θ the dihedral angle between the SOMO and the C—P bond. As consequence, an increase of $a_P$ is expected with increasing $\rho_N^\pi$, that is, increasing $a_N$, and decreasing angle θ.

$$a_{P,\beta} = B_0 + B_1 \cdot \rho_N^\pi \cdot \cos^2\theta \qquad (2)$$

Contra-intuitively, $a_P$ for **b** and **8t** decrease with increasing the polarity of the solvent $E_T^N$ (Figure 3)[5], i.e., when $a_N$ increases. However, the effect is more marked for **b** than for **8t**, i.e., for **2** $a_P$ changes for $a_P$ = 40.80 gauss in *n*-hexane to $a_P$ = 21.80 in methanol whereas for **8t** it changes from $a_P$ = 51.80 G in *n*-pentane to $a_P$ = 47.27 G in NMF. Taking into account equation 2, this decrease of $a_P$ with increasing $a_N$ implies a striking increase of θ for **b** and a small increase for **8t**. In fact, polar solvents are expected to favor zwiterionic mesomeric forms **B** and **D**. Then, an increase in θ means that the phosphoryl and the nitroxyl moiety becomes closer and closer favoring a stabilizing dipole - dipole interaction as depicted in the oxaphosphetane-like structure (Scheme 4). Moreover, the large $a_P$ value in *n*-pentane for **8t** implies a small angle θ meaning a strong hyperconjugation interaction between the SOMO and the C—P bond implying that conformer **8tA** is the favored conformer. The small slope means that bond rotation are strongly impeded in **8t.**

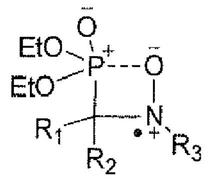

*Scheme 4. Oxaphosphetane-like structure.*

Amazingly, **8c** exhibit the same trend as **b** and **8t** and a striking change of $\Delta a_P \approx 25$ G was observed from *n*-actane ($a_P$ = 47.95 G) to NMF ($a_P$ = 23.11 G) as for **b** except that $a_P$ varies in an exponential fashion with $E_T^N$. As mentioned above, the puzzling changes in $a_N$ for **8c** were assumed due to a conformational equilibrium between **8cA** and **8cE, 8cE** being favored in H-bonding disrupting solvents. Then, in apolar solvents ($E_T^N < 0.2$), the axial position of the diethoxyphosphoryl group in **8cA** maximized the overlapping between the SOMO and the C—P bond (small angle θ in Newman projections in Scheme 3) although 3 *syn*-1,3 interactions which are overbalanced by the IHB and afforded the high $a_P$ value observed in *n*-hexane. On the other hand, in disrupting H-bonding solvents, the conformer **8cE,** exhibiting only one syn-1,3 interaction, is favored involving the diethoxyphosphoryl group in equatorial position and, consequently, a large angle θ (Newman projections in Scheme 4) affording the small $a_P$ values observed (Figure 3).

The angle θ can be estimated with equation 2 for each solvent as long as $B_1 \cdot \rho_N^\pi$ values are available. Thus, assuming $B_1 . \rho_N^\pi$ = 58 G in *n*-pentane, $\theta_1$ is given as ca. 25° for **8c**, values very close from the angle θ observed in the Newman projection supporting the conformation **8cA** in apolar solvents. Using equation 3 and $\theta_1$, it was possible to determine $\theta_n$ for each solvent for **b**, **8t**, and **8c** as displayed in Figure 4. The small variation in θ (Δθ = 10° from *n*-hexane to water) for **8t** confirms that bond rotations are impeded in **8t** and that conformations deviate only a little from the conformer **8tA** (Scheme 3). On the other hand, the variation Δθ of 20° confirms nicely the change of conformation in **b** toward the occurrence of oxaphosphetane-like structure (Scheme 4) in polar and protic solvents. Moreover, as expected, the value Δθ = 32° denotes a dramatic change in structure of **8c** in nice agreement with the chair-chair equilibrium between conformer **8cA**, favored in apolar solvents, and **8cE,** favored in polar and protic solvents.

$$\frac{a_{P,1}}{a_{P,n}} = \frac{a_{N,1}}{a_{N,n}} \cdot \frac{\cos^2\theta_1}{\cos^2\theta_n} \qquad (3)$$

**Example 3**: Titration of water in THF by EPR

Interestingly, a difference $\Delta a_P$ of ca. 5 G is observed between THF and water. As these two solvent are miscible in any amount, the effect of binary mixture of solvents in $a_N$ and $a_P$ was investigated with the aim to develop the first titration of water in solvent by EPR. As displayed in Figure 1, EPR signals in THF (5 lines) and in water (6 lines) are very different. EPR signal was recorded between 0 to 1% of water in THF by steps of 0.1% and 10% to 100% of water by steps of 10% (Table 2 and Figures 5, 6 and 7). Solvent effect of binary mixture on spectroscopic properties has been

intensively investigated using dyes. It has been shown that simplified the model $m = 1$, implying only the occurrence of the solvent exchange reaction is described by equation (6) and account for many solvent effect in binary mixture:

$$Y = Y_1 + \frac{a \cdot x_2^0}{\left(1 - x_2^0\right) + f_{2/1}\left(x_2^0\right)^2} \qquad (6)$$

Therefore, $Y_1$ and $Y_2$ were defined as $a_{P,S1}$ and $a_{P,S2}$ for water as solvent $S_2$ and THF as solvent $S_1$. A good fit was observed for $m = 1$ (Figure 9a) affording $\boldsymbol{a_{P,S1}} = a_{P,THF} = 29.68 \pm 0.07$ G, $a_{P,S2} = \boldsymbol{a_{P,w}} = 24.14 \pm 0.05$, $f_{2/1} = 9.0 \pm 0.5$, $\chi^2 = 0.017$ and $R_2 = 0.997$. Hence, m is the number of solvent molecules involved in the microsphere solvation of the nitroxide for which $\boldsymbol{a_P}$ changes, thus, only one molecule of water close to the nitroxyl moiety of **8c** is required to make $\boldsymbol{a_P}$ change. The value of $f_{2/1}$ larger than 1 means that **8c** would rather be solvated either with pure water or with some molecules of water in its cybotatic region than by pure THF.

The value of $x_{iso}$ is graphically determined as 0.1 (Figure 9a) for $a_{P,xiso}$ as given by equation 7. Then, the polar effect of THF is balanced for 2.4% of water. Thus, the difference of 2.70 G for ≈ 2% of water led us to investigate the potential of 8c in the titration of water in THF as an organic solvent. It has to be mentioned that some Lucarini performed the titration of benzyl alcohol using 2,2,6,6-tetramethylpiperidin-N-oxyl radical and its ability for intermolecular H-bonding.

$$a_{P,x_{iso}} = a_{P,water} + \frac{\left(a_{P,S2} - a_{P,water}\right)}{2} \qquad (7)$$

The plot % volume of water vs $a_P$ (Figure 6) exhibits the same shape as the plot $x_w$ vs $a_P$ (Figure 5). Obviously, the titration of *traces* (volume of THF lower than 50%) of THF in water is irrelevant. On the other hand, water in THF can be titrated accurately up to 30%, except that the relation is not linear. However, the enlargement of the zone from pure THF to 1% water (Figure 7) shows a linear relationship affording an easy titration. Taking into account an error of 0.1 G, accurate titration down to 0.2% water in THF was achieved.

**Table** 2. % water in THF, mole fraction $x_{water}$, nitrogen and phosphorus hyperfine coupling constants $a_N$ and $a_P$, respectively, for different % of water.

| entry | % water | $x_{water}$ | $a_N$ (G) | $a_P$ (G) |
|---|---|---|---|---|
| 1 | 0 | 0 | 14.94 | 29.56 |
| 2 | 0.1 | 0.0045 | 15.05 | 29.47 |
| 3 | 0.2 | 0.0090 | 15.05 | 29.38 |
| 4 | 0.3 | 0.0134 | 15.00 | 29.14 |
| 5 | 0.4 | 0.0178 | 15.06 | 29.06 |
| 6 | 0.5 | 0.0221 | 15.04 | 28.78 |
| 7 | 0.6 | 0.0265 | 15.04 | 28.64 |
| 8 | 0.7 | 0.0308 | 15.10 | 28.48 |
| 9 | 0.8 | 0.0350 | 15.04 | 28.30 |
| 10 | 0.9 | 0.0393 | 15.04 | 28.00 |
| 11 | 1 | 0.0435 | 15.14 | 27.82 |
| 12 | 2 | 0.0840 | 15.21 | 27.28 |
| 13 | 3 | 0.1220 | 15.24 | 26.76 |
| 14 | 4 | 0.1580 | 15.34 | 26.00 |
| 15 | 5 | 0.1920 | 15.34 | 25.82 |
| 16 | 10 | 0.3334 | 15.38 | 25.36 |
| 17 | 20 | 0.5295 | 15.56 | 24.82 |
| 18 | 30 | 0.6586 | 15.62 | 24.52 |
| 19 | 40 | 0.7501 | 15.68 | 24.4 |
| 20 | 50 | 0.8182 | 15.80 | 24.22 |
| 21 | 60 | 0.8710 | 15.86 | 24.12 |
| 22 | 70 | 0.9131 | 15.98 | 24.12 |

(continued)

| entry | % water | $x_{water}$ | $a_N$ (G) | $a_P$ (G) |
|---|---|---|---|---|
| 23 | 80 | 0.9474 | 16.16 | 24.12 |
| 24 | 90 | 0.9759 | 16.22 | 24.12 |
| 25 | 100 | 1 | 16.22 | 24.18 |

In conclusion, an amazing and puzzling cybotactic effect in nitroxide was reported. It was controlled by the occurrence of IHB (Intramolecular Hydrogen Bonding) affording a dramatic change of 25 G from *n*-pentane to water. Interestingly, to the best of our knowledge, this is the first report that a nitroxide exhibits a behavior similar to the one observed for betaïne dyes.

Thus, for the first time, the titration of traces of water in THF (organic solvent) was performed down to 0.1%. Obviously, this is far from matching the Karl-Fischer titration that is suitable down to the ppm range. However, knowing that EPR can be ppb sensitive, it should be possible to develop better probes reaching such a threshold. However, the most interesting applications are likely in the Materials Sciences field to investigate the porosity of membranes, the stability of films in water or in organic solvents, the swelling of polymers and in Biology to investigate drug delivering via (nano)particles or micelles.

**REFERENCES**

[1] B. Knauer, J. J. Napier, J. Am. Chem. Soc. 1976, 98, 4395 - 4400.

[2] A. Sh. Mukhtarov, A. V. Il'Yasov, Ya. A. Levin, I. P. Gozman, M. S. Skorobogatova, E. I. Zoroatskaya,; Theor. Exp. Chem. 1976, 12, 656-660; A. Sh. Mukhtarov, A. V. Il'Yasov, Ya. A. Levin, I. P. Gozman, M. S. Skorobogatova, E. I. Zoroatskaya, Teor. Eksp. Khim. 1976, 12, 831 - 836.

[3] G. Audran, P. Bremond, S. R. A. Marque, G. Obame, ChemPhysChem 2012, 13, 15, 3542-3548.

[4] C. Reichardt, T. Welton in Solvent and Solvent Effect in Organic Chemistry, 4th ed., Wiley-VCH, Weinheim, 2011.

[5] Solvent Effect in β-Phosphorylated Nitroxides: Model Nitroxides" Audran, G.; Bosco, L.; Brémond, P.; Butscher, T, Marque, S. R. A., Appl. Magnet. Reson. 2015.


**Claims**

1. A compound of formula (I) or (II):

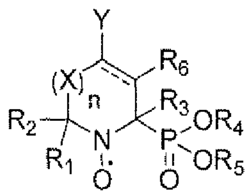

(I)

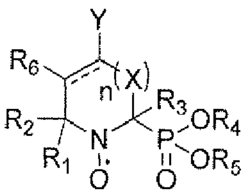

(II)

wherein:

$R_1$ is $C_1$-$C_6$ alkyl optionally substituted by $R_9$;
$R_2$, $R_3$ are independently selected from $C_1$-$C_6$ alkyl, $C_6$-$C_{10}$ aryl, 5 to 7 membered heteroaryl optionally substituted by $R_{10}$;
$R_4$, $R_5$ are independently selected from $C_1$-$C_6$ alkyl, $C_6$-$C_{10}$ aryl, 5 to 7 membered heteroaryl;

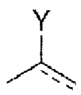

=

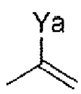

or

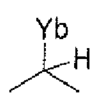

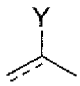 = 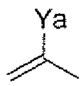 or 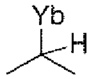

$Y_a$ is selected from $C_1$-$C_6$ alkylcarbonyloxy, $C_1$-$C_6$ alkoxycarbonyloxy, $C_1$-$C_6$ alkylthiocarbonyl wherein said alkyl groups are optionally substituted by one or more F, and/or Cl ; $OSi(R_{11})_3$, $OSi(OR_{11})_3$ and/or $OSi(R_{12})_3$, $OSO_2R_{13}$;
$Y_b$ is H, OH or $NHR_8$;
X is $(CH_2)_mCHR_7(CH_2)_p$;
$R_6$, $R_7$ are independently selected from H, OH, $NH_2$, $NHR_8$, an halogen atom, $C_1$-$C_6$; alkyl, $C_6$-$C_{10}$ aryl, 5 to 7 membered heteroaryl;
$R_8$ is selected from H, $C_1$-$C_6$ alkyl;
$R_9$, $R_{10}$ are each independently selected from OH, $NH_2$, $NHR_8$;
$R_{11}$ is at each occurrence independently selected from $C_1$-$C_6$ alkyl, $C_6$-$C_{10}$ aryl;
$R_{12}$ is independently F, Cl or $C_1$-$C_6$ alkyl;
$R_{13}$ is independently selected from $C_1$-$C_6$ alkyl, $C_1$-$C_6$ perfluoroalkyl, $(C_1$-$C_6)$alkyl$(C_6$-$C_{10})$aryl;
n is 0 or 1;
m is 0 or 1;
p is 0 or 1;
provided that when

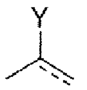 or 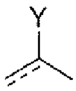 is 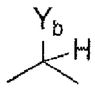 ,

then at least one of $R_6$, $R_7$, $R_9$, $Y_b$ is an hydrophilic group selected from OH, $NH_2$, $NHR_8$, said hydrophilic group being in *cis* position as regards the group $-P(=O)(OR_4)(OR_5)$.

**2.** The compound of claim 1, wherein the compound of formula (I) and (II) is a compound of formula (Ia) or (IIa) :

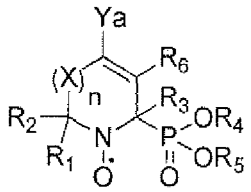
(Ia)

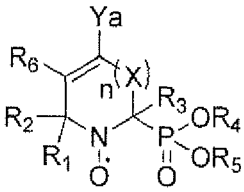
(IIa)

**3.** The compound of claim 1, wherein the compound of formula (I) and (II) is a compound of formula (Ib) or (IIb) :

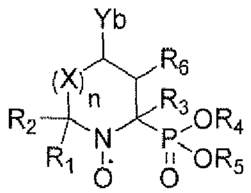
(Ib)

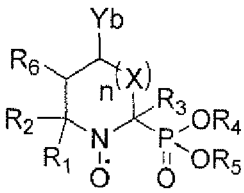
(IIb)

**4.** The compound of any of claims 1 to 3, wherein n is 1.

**5.** The compound of any of claims 1 to 4, wherein m is 0 and p is 0.

**6.** The compound of any of claims 1 to 5, wherein $Y_b$ is OR.

**7.** The compound of any of claims 1 to 6, wherein $R_2$, $R_3$ are each independently a $C_1$-$C_6$ alkyl group.

**8.** The compound of any of claims 1 to 7, wherein $R_4$, $R_5$ are each independently a $C_1$-$C_6$ alkyl group.

**9.** The compound of claim 1, which is diethyl (4-hydroxy-2,6,6-trimethylpiperidin-2-yl-N-oxyl)phosphonate.

**10.** Use of a compound of formula (I) or (II) as defined in any of claims 1 to 9 for detecting and/or quantifying a solvent $S_1$ in a solvent $S_2$, $S_1$ and $S_2$ being distinct,
provided that when

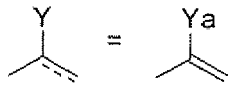

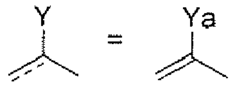

then $S_1$ is water.

**11.** Use of claim 10, wherein $S_1$ is water and $S_2$ is an organic solvent.

**12.** Use of claim 10, wherein $S_1$ is an organic solvent and $S_2$ is water.

**13.** Use of claim 10, wherein $S_1$ and $S_2$ are each an organic solvent.

**14.** Use of claim 13, wherein $\Delta E$ between $S_1$ and $S_2$ corresponds to a (delta)$a_P$ larger than 4G.

**15.** Use of any of claims 10 to 14, wherein the change in the phosphorus hyperfine coupling constant of the compound of formula (I) or (II) is superior to 15 G between $S_1$ and $S_2$.

**16.** Use according to any of claims 10 to 15, wherein $S_1$ is a solvent crossing a polymeric film or a polymeric or biological membrane.

**17.** Use according to any of claims 10 to 15, for studying or monitoring membrane porosity, film permeability, swelling of polymer, stability of materials, drug delivery.

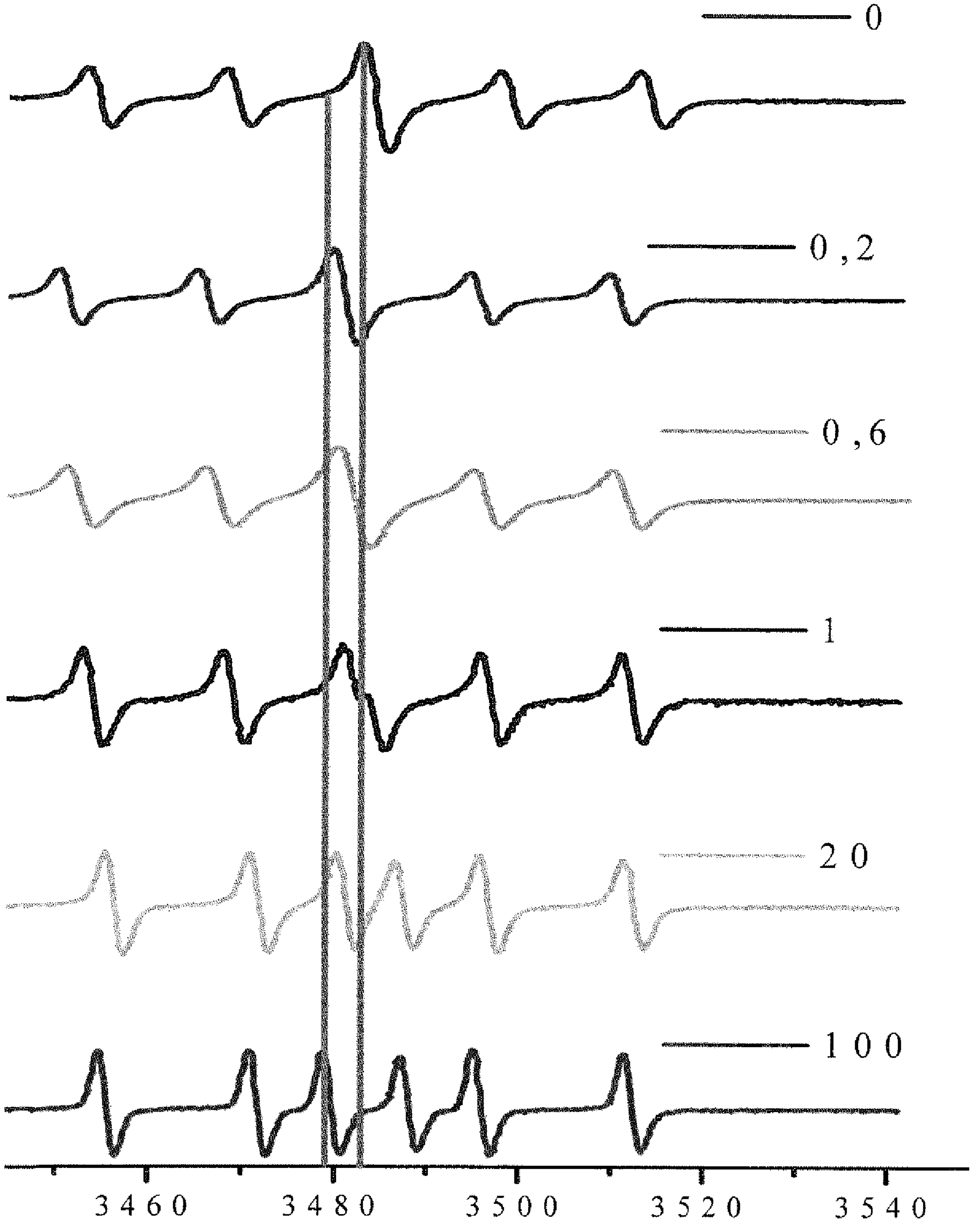


FIGURE 1

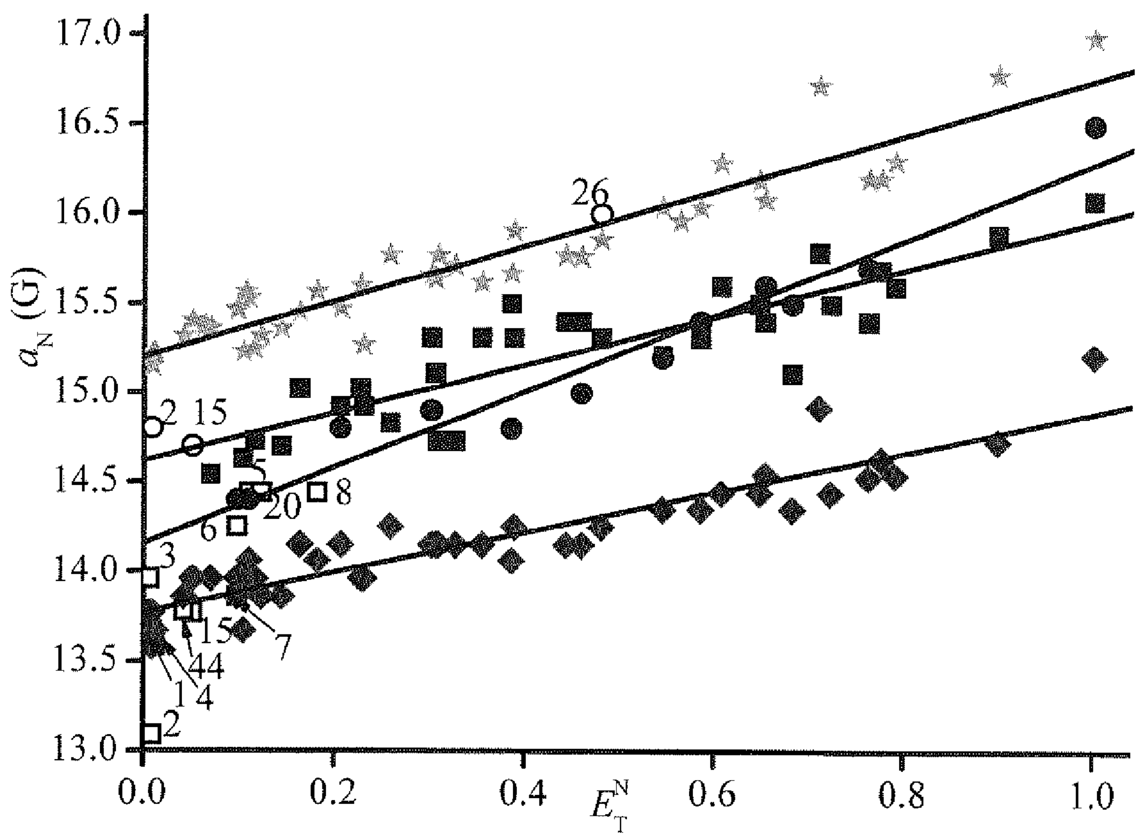
17.0
16.5
16.0
15.5
15.0
14.5
14.0
13.5
13.0
$a_N$ (G)
0.0
0.2
0.4
0.6
0.8
1.0
$E_T^N$
26
2
15
5
20
8
6
3
15
44
1
4
7
2

FIGURE 2

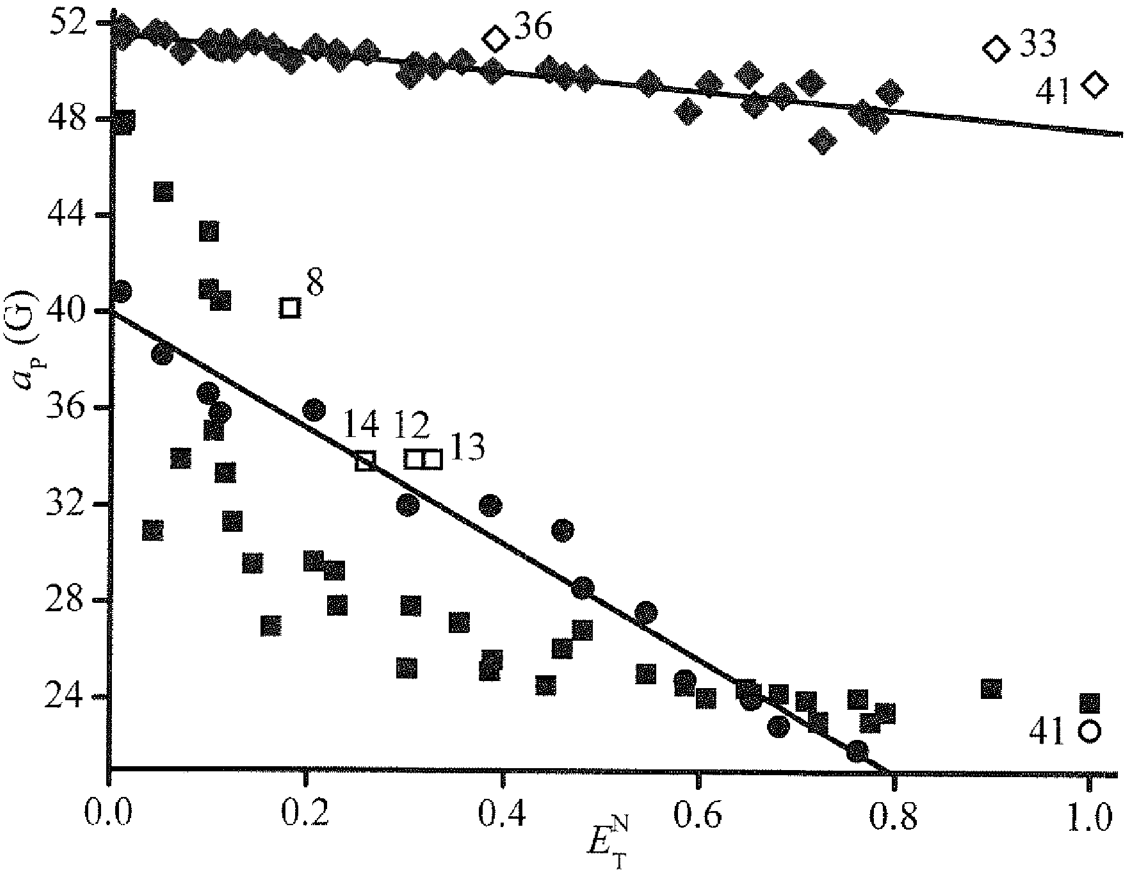


FIGURE 3

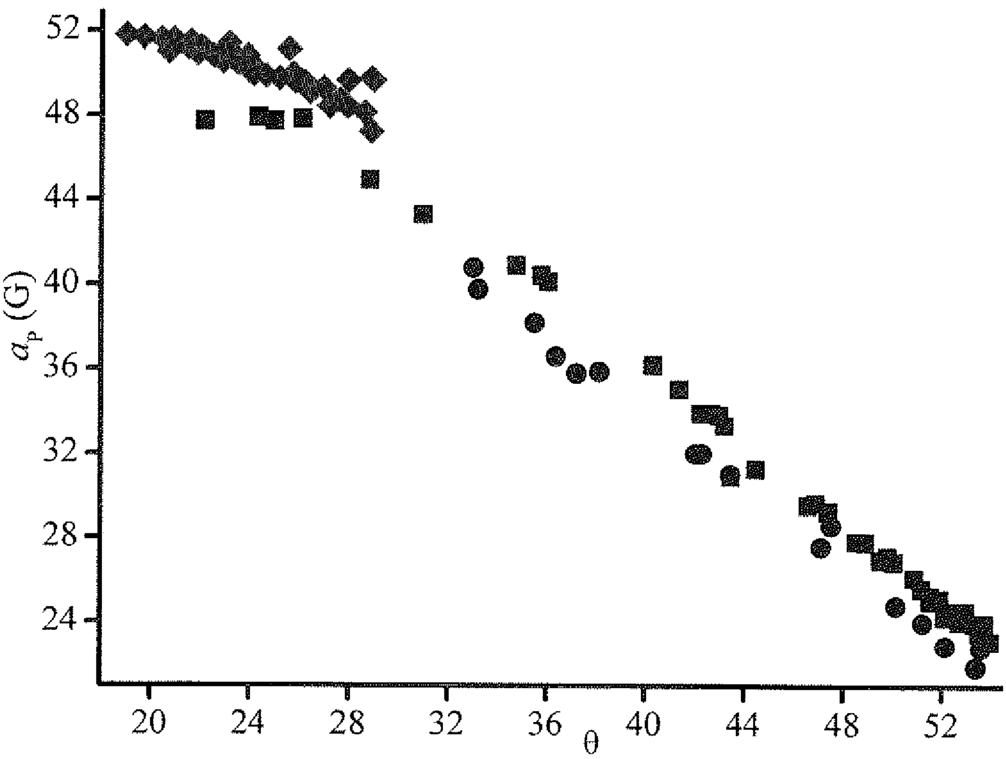


FIGURE 4

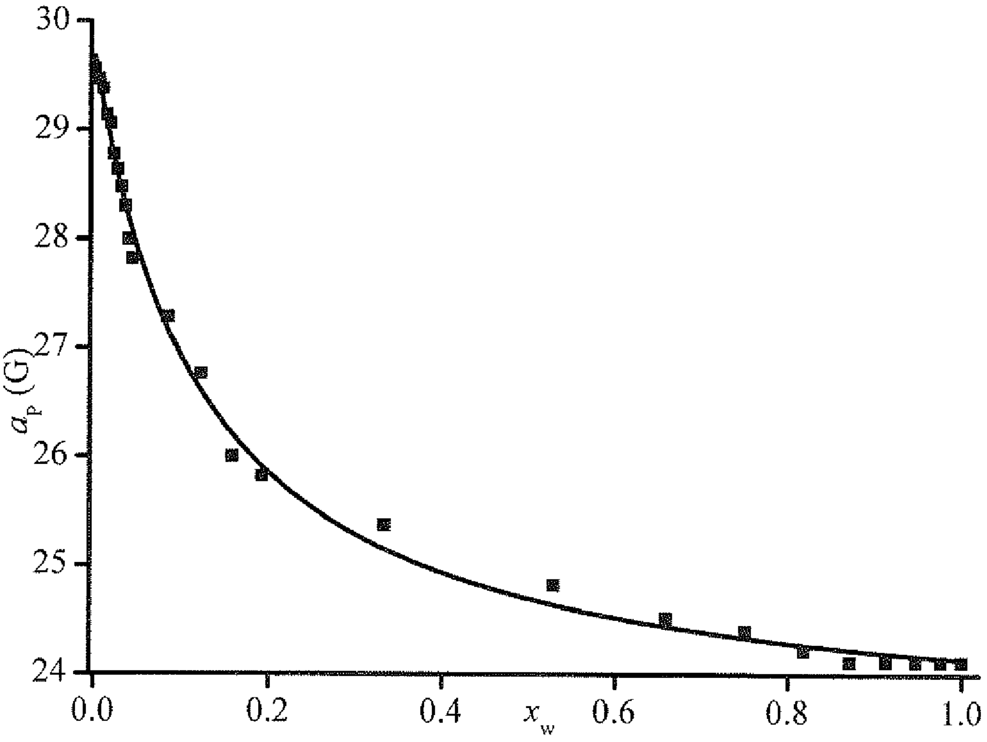


FIGURE 5

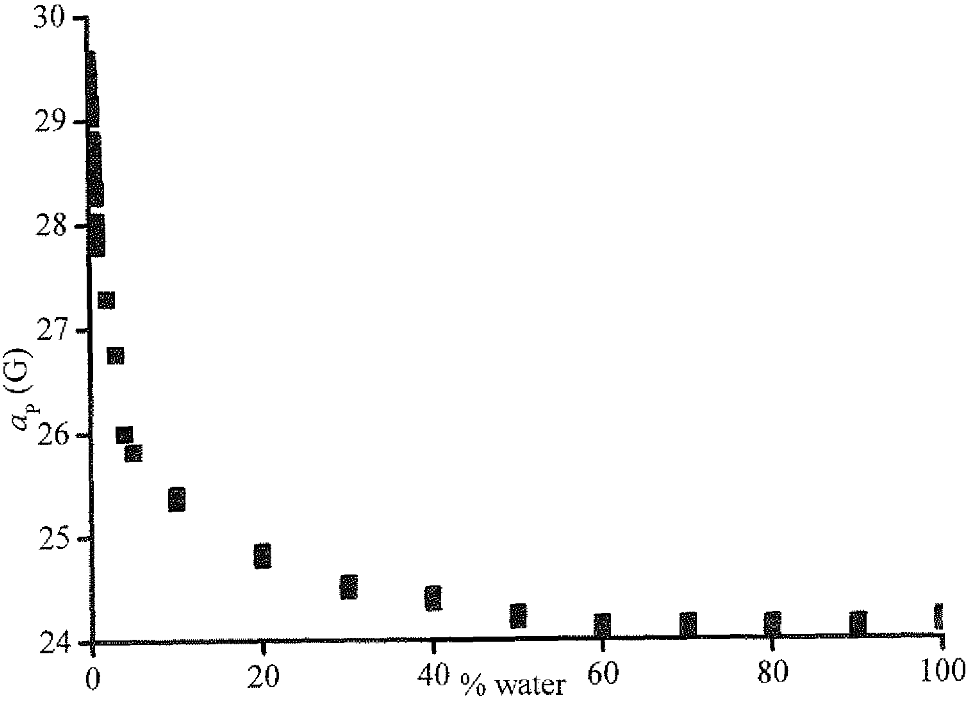


FIGURE 6

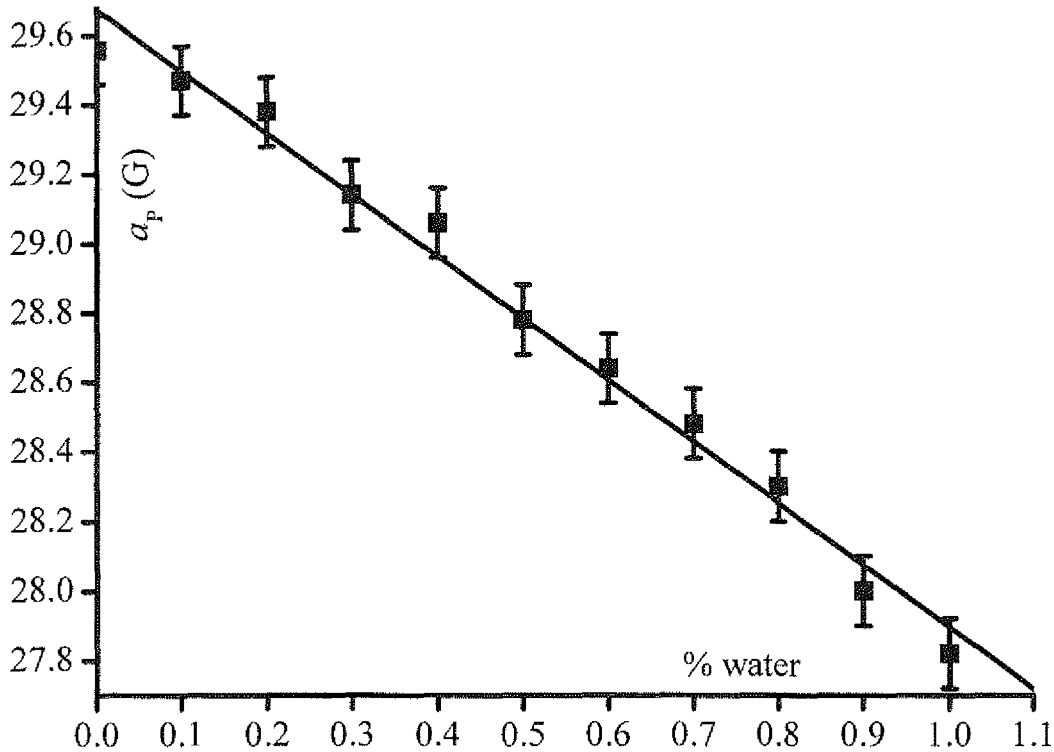
29.6
29.4
29.2
29.0
28.8
28.6
28.4
28.2
28.0
27.8
$a_P$ (G)
% water
0.0
0.1
0.2
0.3
0.4
0.5
0.6
0.7
0.8
0.9
1.0
1.1

FIGURE 7

Europäisches Patentamt
European Patent Office
Office européen des brevets

# EUROPEAN SEARCH REPORT

Application Number
EP 15 30 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | GÉRARD AUDRAN ET AL: "Solvent Effect in [beta]-Phosphorylated Nitroxides: Model Nitroxides", APPLIED MAGNETIC RESONANCE., vol. 46, no. 12, 24 February 2015 (2015-02-24), pages 1333-1342, XP055232777, AU ISSN: 0937-9347, DOI: 10.1007/s00723-015-0649-4 * abstract * * compound 5 * * tables 1-3 * ----- | 1,10 | INV. C07F9/59 |

TECHNICAL FIELDS SEARCHED (IPC)
C07F

1 The present search report has been drawn up for all claims

| Place of search | Date of completion of the search | Examiner |
|---|---|---|
| The Hague | 8 January 2016 | Eberhard, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BREIT, B. ; BREUNINGER, D.** *J. Am. Chem. Soc.,* 2004, vol. 126, 10244
- **B. KNAUER ; J. J. NAPIER.** *J. Am. Chem. Soc.,* vol. 98, 4395-4400
- **A. SH. MUKHTAROV ; A. V. IL'YASOV ; YA. A. LEVIN ; I. P. GOZMAN ; M. S. SKOROBOGATOVA ; E. I. ZOROATSKAYA.** *Theor. Exp. Chem.,* 1976, vol. 12, 656-660
- **A. SH. MUKHTAROV ; A. V. IL'YASOV ; YA. A. LEVIN ; I. P. GOZMAN ; M. S. SKOROBOGATOVA ; E. I. ZOROATSKAYA.** *Teor. Eksp. Khim.,* 1976, vol. 12, 831-836
- **G. AUDRAN ; P. BREMOND ; S. R. A. MARQUE ; G. OBAME.** *ChemPhysChem,* 2012, vol. 13 (15), 3542-3548
- **C. REICHARDT ; T. WELTON.** Solvent and Solvent Effect in Organic Chemistry. Wiley-VCH, 2011
- **AUDRAN, G. ; BOSCO, L. ; BRÉMOND, P. ; BUTSCHER, T ; MARQUE, S. R. A.** Solvent Effect in β-Phosphorylated Nitroxides: Model Nitroxides. *Appl. Magnet. Reson.,* 2015